# EUROPÄISCHE PATENTSCHRIFT

(11) **EP 2 574 810 B1**
(45) Veröffentlichungstag und Bekanntmachung des Hinweises auf die Patenterteilung: **02.05.2018**
(21) Anmeldenummer: 12186609.9
(22) Anmeldetag: 28.09.2012
(51) Int. Cl.: F16D 23/12, B60K 6/387, B60K 6/40, B60K 6/48, F16D 13/56

(54) **Antriebseinheit mit einer elektrischen Maschine**
Drive unit with an electric machine
Unité d'entraînement avec une machine électrique

(30) Priorität: 30.09.2011 AT 14222011
(43) Veröffentlichungstag der Anmeldung: 03.04.2013
(73) Patentinhaber: STEYR MOTORS GmbH, 4407 Steyr (AT)
(72) Erfinder: Aschaber, Michael, 4421 Aschach a. d. Steyr (AT); Mandorfer, Rudolf, 4540 Bad Hall (AT); Resch, Bernhard, 4596 Steinbach/Steyr (AT)
(74) Vertreter: Burger, Hannes

(56) Entgegenhaltungen:
- EP-A1- 2 082 955
- EP-A2- 0 776 779
- EP-A2- 1 452 376
- WO-A1-2012/038078
- DE-A1- 10 209 514
- DE-A1-102007 001 840
- DE-A1-102008 061 951
- US-A1- 2008 015 085
- US-A1- 2011 070 995

## Beschreibung

Die Erfindung betrifft eine Antriebseinheit eines Wasserfahrzeuges mit einer elektrischen Maschine nach dem Oberbegriff des Anspruchs 1.

Antriebseinheiten mit einer elektrischen Maschine werden beispielsweise in Fahrzeugen, insbesondere Wasserfahrzeugen, mit Hybridantrieb eingesetzt. So sind aus dem Stand der Technik bereits Fahrzeuge bekannt, in denen ein Hybridantrieb eingesetzt wird, der eine Verbrennungskraftmaschine und eine elektrische Maschine aufweist.

Die US 2001/0070995 A1 beschreibt ein Hybridantriebsystem mit einer Verbrennungskraftmaschine, einem Elektromotor, einem Stufenlosgetriebe und einem dem Stufenlosgetriebe nachgeschalteten Differentialgetriebe für die Antriebsachse eines Kraftfahrzeuges, sowie einem Zahnradgetriebe oder Kettentrieb zwischen dem Elektromotor und dem Stufenlosgetriebe. Der Ölhaushalt des Stufenlosgetriebes ist dabei vom Ölhaushalt des Zahnradgetriebes oder Kettentriebes öl- bzw. flüssigkeitsdicht getrennt. Die Rotorachse des Elektromotors und die Kurbelwellenachse der Verbrennungskraftmaschine sind parallel zueinander angeordnet. Mittels einer Kupplungsvorrichtung ist die Verbrennungskraftmaschine gegenüber dem Stufenlosgetriebe, dem Elektromotor und dem Differentialgetriebe wahlweise koppel- und entkoppelbar.

Die EP 0 776 779 A2 offenbart ein weiteres Hybridantriebssystem mit einer Verbrennungskraftmaschine, einem Elektromotor, einer zwischengeschalteten Getriebeeinheit und einem nachgeschalteten Schaltgetriebe mit mehreren Untersetzungsstufen. Zur bedarfsweisen Kopplung und Entkopplung von Verbrennungskraftmaschine und Elektromotor ist eine Hauptkupplung vorgesehen. Zwei zusätzliche Kupplungsvorrichtungen sind für Gangwechselvorgänge im Schaltgetriebe vorgesehen. Die beiden zusätzlichen Kupplungsvorrichtungen werden via ein hydraulisches System umfassend eine Ölwanne, eine einzige Ölpumpe, Rohrleitungen, Umschaltventil, Magnetventil und letztendlich via einen öldruckbeaufschlagten Kolben betätigt.

Die US 2008/0015085 A1 offenbart ebenso einen Hybridantrieb mit einer Verbrennungskraftmaschine und einem Elektromotor. Eine erste und eine zweite Kupplungsvorrichtung sind vorgesehen, um die Antriebsmomente der Verbrennungskraftmaschine und des Elektromotors in Bezug auf eine Abgangswelle zu addieren oder selektiv zu übertragen. Die erste und zweite Kupplungsvorrichtung sind dabei als Lamellenkupplungen ausgeführt, welche koaxial und konzentrisch zueinander angeordnet sind. Die wahlweise Betätigung der beiden Lamellenkupplungen erfolgt mittels Kolben, welche von einem Hydrauliksystem mit Druck beaufschlagbar sind. Das Hydrauliksystem umfasst eine Ölvorratswanne, eine Ölpumpe, Magnetventile, Rohrleitungen, Sicherheits- bzw. Überdruckventile, Drosselventile, zahlreiche Dichtungselemente und fluidische Übergabeschnittstellen.

Die DE 102 09 514 A1 beschreibt einen Antriebsstrang mit einer Brennkraftmaschine, einer Elektromaschine und einem Getriebe zum Betreiben eines Kraftfahrzeuges. In einem Rekuperationsbetrieb des Kraftfahrzeuges wird dabei die kinetische Energie des Kraftfahrzeuges in Rotationsenergie einer Schwungmasse und/oder in elektrische Ladeenergie für eine Batterie oder einen elektrischen Kondensator umgewandelt. Die Antriebsmomente werden über schaltbare Kupplungen unterbrochen bzw. weitergeleitet. Damit soll ein verbesserter Wirkungsgrad während dem Betrieb des Kraftfahrzeuges erzielt werden.

Die nicht vorveröffentlichte WO 2012/038078 A1 betrifft ein hybrides Antriebssystem mit Verbrennungskraftmaschine und Elektromotor. Der Elektromotor und die Verbrennungskraftmaschine sind dabei separat zu einer die beiden Antriebsmomente koppelnden Getriebeeinrichtung positioniert. Zwischen der Rotorwelle des Elektromotors und der gemeinsamen Abtriebswelle von Verbrennungskraftmaschine und Elektromotor ist eine hydrodynamische Kupplung angeordnet. Diese hydrodynamische Kupplung dient unter anderem dazu, den Elektromotor von unvermeidbaren Drehschwingungen der Verbrennungskraftmaschine zu entkoppeln und so den Wirkungsgrad des Elektromotors nicht zu verschlechtern oder diesen zu schädigen.

Die DE 10 2007 001 840 A1 offenbart einen Hybridantrieb für ein Kraftfahrzeug. Der Hybridantrieb besteht aus einem Verbrennungsmotor und einem dem Verbrennungsmotor nachgeordneten Getriebe, das von dem Verbrennungsmotor antreibbar ist. Weiters ist dem Getriebe ein Elektromotor zugeordnet, über welchen das Getriebe zusätzlich antreibbar ist. Das hierbei eingesetzte Getriebe umfasst eine Antriebswelle, die von dem Verbrennungsmotor angetrieben wird und in Längsrichtung des Getriebes verläuft, zudem eine Abtriebswelle zum Antreiben einer dem Getriebe nachgeordneten Arbeitsmaschine, oder bei einem Fahrzeug der Antriebsräder, und eine Vielzahl von manuell oder automatisch schaltbaren Gangstufen zum Einstellen verschiedener Übersetzungsverhältnisse zwischen der Antriebswelle und der Abtriebswelle. Als wesentlich wurde erachtet, dass der Elektromotor mit seiner Längsachse und/oder Drehachse seines Läufers parallel oder im Wesentlichen parallel zur Antriebswelle seitlich außen am Getriebe angeschlossen ist.

Die EP 1 452 376 A2 beschreibt einen Hybridantrieb für ein radgebundenes Kraftfahrzeug mit einer Verbrennungskraftmaschine, einem nachgeordneten hydraulischen Drehmomentwandler und einem dem Drehmomentwandler nachgeordneten Schaltgetriebe. Zwischen dem hydraulischen Drehmomentwandler und dem Schaltgetriebe ist eine Kupplungsvorrichtung vorgesehen. Während der Leerlauf- bzw. Gangwechselphasen wird dabei die Antriebsenergie der Verbrennungskraftmaschine mittels einem Motor-Generator, welcher in diesen Phasen als Generator betrieben wird, in elektrische Energie umgewandelt und in eine Speicherbatterie geladen.

Die DE 10 2008 061 951 A1 offenbart ein hybrides Schiffsantriebssystem mit einer ersten Schaltkupplung mit einem Eingang und einem Ausgang, welche selektiv miteinander in Antriebsverbindung bringbar und voneinander trennbar sind. Weiters ist ein Verbrennungsmotor beschrieben, welcher mit einer Antriebswelle mit dem Eingang der ersten Schaltkupplung verbunden ist, und welcher über diese Schaltkupplung mit einem Getriebe verbunden ist. An der Abtriebswelle des Getriebes ist ein Antriebsstrang über eine weitere Schaltkupplung verbunden. Außerdem ist eine elektrische Maschine genannt, welche als Generator-Motor betreibbar ist und eine Triebwelle zur Abtriebswelle des Getriebes aufweist. Die elektrische Maschine weist außerdem eine elektrische Schnittstelle zum Verbinden mit einer Elektroversorgungsanordnung auf.

Die EP 2 082 955 A1 beschreibt ein Hybridmodul zum Einbau zwischen einem Verbrennungsmotor und einem Getriebe eines Wasserfahrzeuges, wobei das Hybridmodul außerhalb des Gehäuses des Verbrennungsmotors vorgesehen ist. Weiters ist eine geeignete Schaltung zur wahlweisen Verbindung des Getriebes mit dem Verbrennungsmotor und/oder dem Gene rator-Motor vorgesehen, wobei hier als mögliche zu verwendende Kupplungsvarianten, formschlüssige Kupplungen wie z.B. eine Klauenkupplung, oder kraftschlüssige Kupplungen wie z.B. eine Lamellenkupplung, genannt werden.

Aus WO 2006/034520 ist ein Kraftfahrzeug bekannt, in dem ein Hybridantrieb eingesetzt wird, der aus einer Verbrennungskraftmaschine und zwei elektrischen Maschinen besteht. Die Verbrennungskraftmaschine und die elektrischen Maschinen sind derart innerhalb des Kraftfahrzeugs angeordnet, dass eine Mittelachse einer Abtriebswelle der Verbrennungskraftmaschine koaxial zu einer Mittelachse einer Abtriebswelle der jeweiligen elektrischen Maschine ist.

Eine derartige Anordnung der Verbrennungskraftmaschine und der elektrischen Maschine weist den Nachteil auf, dass der Hybridantrieb in Längsrichtung sehr groß bzw. relativ langgestreckt ausgebildet ist. Dies ist insbesondere nachteilig, da in Fahrzeugen häufig nur ein begrenzter Einbauraum zur Verfügung steht.

Die Aufgabe der Erfindung besteht darin, eine Antriebseinheit bereitzustellen, die zumindest den zuvor genannten Nachteil nicht aufweist.

Die Aufgabe wird durch den Gegenstand des Anspruchs 1 gelöst. Vorteilhafte Ausgestaltungen der Erfindung sind Gegenstand der abhängigen Ansprüche.

Erfindungsgemäß ist eine Antriebseinheit mit einer elektrischen Maschine, die eine Abtriebswelle aufweist, und einer Kupplungseinheit, die wenigstens eine Kupplungswelle aufweist, vorgesehen. Die Kupplungseinheit ist mit der Abtriebswelle der elektrischen Maschine gekoppelt und über die Kupplungswelle mit einer Abtriebswelle einer Verbrennungskraftmaschine koppelbar. Dabei sind die Abtriebswelle und Kupplungswelle derart angeordnet, dass eine Mittelachse der Abtriebswelle der elektrischen Maschine seitlich bzw. radial versetzt zu einer Mittelachse der Kupplungswelle ist.

Die versetzte bzw. nebeneinander liegende Anordnung der Abtriebswelle der elektrischen Maschine und der Kupplungswelle weist den Vorteil auf, dass die Antriebseinheit in Bezug auf die Längsrichtung schmal bzw. relativ kurz ausgebildet ist. Somit kann ein aus der Antriebseinheit und der Verbrennungskraftmaschine gebildeter Hybridantrieb grundsätzlich schmäler bzw. in Bezug auf die Längsachse der Kurbelwelle der Verbrennungskraftmaschine kürzer ausgebildet werden, als der aus dem Stand der Technik bekannte Hybridantrieb.

Im Sinne der Erfindung wird als versetzte Anordnung der Mittelachse der Abtriebswelle der elektrischen Maschine und der Mittelachse der Kupplungswelle eine Anordnung verstanden, bei der die Abtriebswelle der elektrischen Maschine und der Kupplungswelle nicht koaxial ausgebildet sind. Die Mittelachse der Abtriebswelle der elektrischen Maschine kann dabei parallel zu der Mittelachse der Kupplungswelle versetzt sein. Natürlich sind auch Anordnungen der Abtriebswelle der elektrischen Maschine und der Kupplungswelle möglich, bei der die Mittelachsen nicht parallel zueinander sind. In diesen Ausführungen muss sichergestellt sein, dass eine Kupplung der Abtriebswelle der elektrischen Maschine mit der Kupplungseinheit möglich ist.

Die Abtriebswelle der elektrischen Maschine kann zur Kupplungswelle beliebig versetzt sein. So ist es möglich, dass die Mittelachse der Abtriebswelle der elektrischen Maschine bezüglich der Mittelachse der Kupplungswelle bei einer stirnseitigen Betrachtung der Antriebseinheit, also in Richtung der Mittelachsen, in horizontaler und/oder in vertikaler Richtung versetzt ist.

Als Kupplungswelle wird im Sinne der Erfindung eine Welle verstanden, die mit der Abtriebswelle einer Verbrennungskraftmaschine, insbesondere einer Kurbelwelle, gekoppelt werden kann. Natürlich wird als Kupplungswelle auch eine mit der Abtriebswelle der Verbrennungskraftmaschine einstückig ausgebildete Welle verstanden, die in die Antriebseinheit, insbesondere in ein Gehäuse der Antriebseinheit hineinragt. Ferner wird im Sinne der Erfindung als Längsrichtung der Antriebseinheit die Richtung verstanden, die im Wesentlichen parallel zur Mittelachse der Abtriebswelle der Verbrennungskraftmaschine ist.

Die Kupplungswelle kann derart angeordnet sein, dass diese koaxial zu der Abtriebswelle der Verbrennungskraftmaschine und/oder koaxial zu einer Eingangswelle eines Getriebes, insbesondere eines Schaltgetriebes, ausgebildet ist. Eine koaxiale Anordnung der Kupplungswelle bezüglich der Abtriebswelle der Verbrennungskraftmaschine und/oder der Eingangswelle des Getriebes besteht natürlich dann, wenn die Antriebseinheit an der Verbrennungskraftmaschine bzw. das Getriebe an der Antriebseinheit befestigt ist.

In einer bevorzugten Ausführung kann die Kupplung der elektrischen Maschine mit der Verbrennungskraftmaschine über ein Stirnradgetriebe erfolgen. Genauer gesagt kann die Kupplung derart erfolgen, dass ein Zahnrad der Abtriebswelle der elektrischen Maschine mit einem Kupplungszahnrad der Kupplungseinheit kämmt. Alternativ kann zwischen dem mit der Abtriebswelle der elektrischen Maschine verbundenen Zahnrad und dem Kupplungszahnrad der Kupplungseinheit wenigstens ein Zwischenzahnrad vorgesehen sein, das mit den beiden Zahnrädern kämmt. Bei einem Vorsehen von mehreren Zwischenzahnrädern kann ein Zwischenzahnrad anstelle mit dem Kupplungszahnrad und/oder dem Zahnrad der Antriebseinheit mit einem anderen Zwischenzahnrad kämmen.

Dabei kann der Abstand zwischen der Mittelachse der elektrischen Maschine und der Mittelachse der Kupplungswelle umso größer gewählt werden, je größer das eingesetzte Zwischenzahnrad ist. Alternativ oder zusätzlich ist es möglich, dass das auf der Abtriebswelle der elektrischen Maschine angebrachte Zahnrad und das Kupplungszahnrad jeweils abnehmbar von der Abtriebswelle bzw. der Kupplungseinheit ausgebildet sind. Dadurch kann durch entsprechende Wahl des Durchmessers des auf der Abtriebswelle angebrachten Zahnrads und/oder Kupplungszahnrads ebenfalls eine Kopplung zwischen der elektrischen Maschine und der Kupplungseinheit unabhängig von dem Abstand zwischen diesen beiden Bauteilen sichergestellt werden. Folglich ist sichergestellt, dass unabhängig von der Position der elektrischen Maschine auf dem Gehäuse der Antriebseinheit eine Kupplung von dieser mit der Kupplungseinheit vorliegt.

Die Position von der elektrischen Maschine hängt maßgeblich von dem von der Verbrennungskraftmaschine zur Verfügung gestellten Bauraum ab, der sich bei unterschiedlichen Verbrennungskraftmaschinen an jeweils unterschiedlichen Stellen befinden kann. Somit wird es durch das Zwischenzahnrad und/oder das abnehmbare Zahnrad bzw. Kupplungszahnrad in einfacher Art und Weise ermöglicht, dass ohne signifikante konstruktive Änderungen der Antriebseinheit diese bei unterschiedlichen Verbrennungskraftmaschinen eingesetzt werden kann.

Natürlich kann die Kupplung der Verbrennungskraftmaschine mit der elektrischen Maschine anstelle des Stirnradgetriebes auf andere Weise, wie beispielsweise durch Riemen, Zahnketten, etc., erfolgen.

Die Kupplungswelle und/oder die Abtriebswelle der elektrischen Maschine können über ein Getriebekupplungsmittel der Kupplungseinheit mit der Eingangswelle eines Getriebes, insbesondere eines Schaltgetriebes, gekoppelt sein. Das Getriebekupplungsmittel kann mit dem Kupplungszahnrad verbunden sein und einen Hohlraum aufweisen, in dem die Eingangswelle des Getriebes mit dem Getriebekupplungsmittel drehfest verbunden ist. Somit ist auf einfache Weise sichergestellt, dass eine Drehbewegung der Abtriebswelle der elektrischen Maschine und/oder der Abtriebswelle der Verbrennungskraftmaschine auf die Eingangswelle des Getriebes übertragen wird. Gemäß der Erfindung weist die Kupplungseinheit ein Kupplungsmittel, insbesondere eine Lamellenkupplung, zum Koppeln oder Entkoppeln der Verbrennungskraftmaschine von der elektrischen Maschine auf. Das Kupplungsmittel kann zwischen der Kupplungswelle und der Abtriebswelle der elektrischen Maschine angeordnet sein. Insbesondere kann das Kupplungsmittel zwischen der Kupplungswelle und dem Kupplungszahnrad der Kupplungseinheit vorgesehen und mit diesen verbunden sein. Dabei dient das Kupplungsmittel zum Koppeln oder Entkoppeln der Kupplungswelle mit bzw. von dem Kupplungszahnrad.

Das Kupplungsmittel ist derart ausgebildet, dass es im Ruhezustand eine Bewegungskopplung der Verbrennungskraftmaschine mit der elektrischen Maschine aufbaut. Insbesondere ist das Kupplungsmittel, welches zum bedarfsweisen Koppeln und Entkoppeln der Verbrennungskraftmaschine gegenüber der elektrischen Maschine vorgesehen ist, derart ausgeführt, dass der bewegungskoppelnde Aktivzustand zwischen der Verbrennungskraftmaschine und der elektrischen Maschine während des Ruhezustandes des Kupplungsmittels vorliegt. Dies kann dadurch sichergestellt werden, dass beispielsweise wenigstens ein Spannmittel, insbesondere ein Federpaket, das Kupplungsmittel im gekoppelten Zustand hält. Insbesondere ist es zweckmäßig, wenn die Kupplungseinheit wenigstens ein Spannmittel, insbesondere ein Federpaket umfasst, dessen federelastische Vorspannung das Kupplungsmittel stetig in den betätigten Aktivzustand drängt, in welchem die Verbrennungskraftmaschine, die Abtriebswelle der elektrischen Maschine und ein abgangsseitiges Getriebekupplungsmittel der Antriebseinheit in Bezug auf Drehbewegungen und Drehmomentübertragungen gekoppelt sind. Aufgrund der zuvor genannten Bewegungskopplung dreht sich die Abtriebswelle der elektrischen Maschine infolge einer Drehbewegung der Abtriebswelle der Verbrennungskraftmaschine auch dann, wenn die elektrische Maschine ausgeschaltet ist. Die Abtriebswelle bzw. der Rotor der elektrischen Maschine wird dabei zusätzlich als Schwungmasse für die Verbrennungskraftmaschine genutzt, wodurch die Abmessung bzw. Dimensionierung der Schwungmasse der Verbrennungskraftmaschine, insbesondere der Schwungmasse an der Kurbelwelle, reduziert werden kann. Ein weiterer Vorteil liegt darin, dass durch das federelastische Spannmittel, insbesondere durch ein Federpakt, keine elektrische Energie erforderlich ist, um eine Antriebsverbindung von der Verbrennungskraftmaschine auf den Antriebsstrang eines Fahrzeuges, insbesondere auf das Antriebsmittel eines Wasserfahrzeuges, wie z.B. einen Schiffspropeller, zu erzielen. Dadurch ist es ermöglicht, auch dann, wenn die an Board gespeicherte, elektrische Antriebsenergie verbraucht ist bzw. nicht mehr ausreichend ist um beispielsweise zum Zielort bzw. Hafen zu gelangen, sich alleinig mit der Antriebsleistung der Verbrennungskraftmaschine fortbewegen zu können. Dadurch wird die Funktionssicherheit bzw. die Zuverlässigkeit und Verfügbarkeit der Fortbewegungsmöglichkeit gesteigert.

Das Kupplungsmittel wird durch Betätigung eines Schaltmittels, das mit dem Kupplungsmittel gekoppelt ist, von einem gekoppelten Zustand in einen ungekoppelten Zustand überführt. Bei einer Betätigung des Schaltmittels und damit des Kupplungsmittels liegt keine Bewegungskopplung zwischen der Verbrennungskraftmaschine und der elektrischen Maschine vor. Das heißt die Verbrennungskraftmaschine und die elektrische Maschine können bei Bedarf durch aktives Betätigen des Schaltmittels in Bezug auf Drehbewegungen voneinander entkoppelt werden. Dabei ist festzuhalten, dass eine Bewegungskopplung bzw. Drehbewegungsverbindung zwischen der elektrischen Maschine und einem abgangsseitigen Getriebekupplungsmittel der Antriebseinheit weiterhin bestehen bleibt. Insbesondere ist eine fixe bzw. unaufhebbare Bewegungskopplung zwischen der Abtriebswelle der elektrischen Maschine und dem abgangsseitigen Getriebekupplungsmittel der Antriebseinheit ausgebildet, was vorzugsweise durch eine dazwischen liegende Zahnrad- bzw. Stirnradkopplung umgesetzt ist. Das entsprechende Getriebekupplungsmittel ist dabei zur Drehbewegungskopplung mit einem Schalt- bzw. Marinegetriebe ausgebildet und somit zur Übertragung der Antriebsenergie an den Antriebsstrang eines Fahrzeuges, insbesondere eines Wasserfahrzeuges, vorgesehen. Somit ist die Verbrennungskraftmaschine mittels der Kupplungseinheit bzw. via Überführung des Kupplungsmittels in den entkoppelnden Zustand bei Bedarf bzw. Erfordernis aus dem fixen bzw. permanenten Antriebsverbund zwischen elektrischer Maschine und Getriebekupplungsmittel wegschaltbar.

Das Schaltmittel kann einen Hebel und eine Nocke aufweisen, die mit dem Hebel drehfest verbunden ist. Ferner kann das Schaltmittel ein gabelförmiges Übertragungsmittel zum Übertragen einer Schaltbewegung auf das Kupplungsmittel aufweisen, das abhängig von der Nockenstellung unterschiedlich stark ausgelenkt werden kann. Insbesondere ist das Übertragungsmittel derart ausgebildet, dass es sich bei einer Auslenkung infolge der Nockenbewegung um eine Drehachse dreht. Bei einer Auslenkung des gabelförmigen Übertragungsmittels wird durch dieses eine Kraft auf das Kupplungsmittel ausgeübt, die dieses in die ungekoppelte bzw. gelöste Stellung überführt.

Die Betätigung des Hebels des Schaltmittels erfolgt elektrisch mittels einem elektrisch antreibbaren Aktuator und/oder manuell. Bei einer manuellen Betätigung werden beispielsweise 500N als manuelle Betätigungskraft benötigt, um das Kupplungsmittel in eine entkoppelte Stellung zu überführen. Die mögliche manuelle Betätigung des Schaltmittels bietet den Vorteil, dass die, insbesondere im Marinebereich, geforderte manuelle Notentkopplung der Verbrennungskraftmaschine von der elektrischen Maschine möglich ist. Insbesondere kann durch dieses grundsätzlich elektrisch bzw. elektromotorisch, bei Bedarf jedoch auch rein manuell betätigbare Schaltmittel eine manuelle Not-Entkoppelung der Verbrennungskraftmaschine von der elektrischen Maschine erfolgen, sodass bei einem Funktionsausfall der Verbrennungskraftmaschine rein elektrisch angetrieben, insbesondere weitergefahren werden kann. Umgekehrt kann dadurch bei einer Störung im elektrischen Antriebsstrang, beispielsweise aufgrund von erschöpften oder nahezu entleerten elektrischen Energiespeichern, ausschließlich mittels der Antriebsleistung der Verbrennungskraftmaschine eine Fortbewegung erzielt werden, was insbesondere bei Wasserfahrzeugen von bedeutendem Vorteil ist bzw. sicherheitstechnisch relevant ist.

Entsprechend einer zweckmäßigen Ausführung ist vorgesehen, den elektrischen Aktuator für das Schaltmittel als Stellmotor, insbesondere als Elektromotor mit einem Spindelgetriebe auszuführen. Eine linear verstellbare Spindelmutter des Stellmotors kann dabei mit dem Schaltmittel bewegungsgekoppelt sein. Weiters kann eine manuell lösbare Kupplungsverbindung, beispielsweise eine Bolzenverbindung mit Splintsicherung ausgebildet sein, durch welche das Schaltmittel bei Bedarf vom elektrischen Aktuator trennbar, insbesondere manuell und werkzeuglos entkoppelbar ist. Weiters kann vorgesehen sein, dass das Schaltmittel mittels einem hebeluntersetzten Seilzug oder Gestänge, oder mittels einer hydraulischen Zylinderanordnung aus Geber- und Nehmerzylinder unter Aufbringung von manueller Betätigungskraft schaltbar ist, wodurch das Kupplungsmittel in den entkoppelnden Zustand überführbar ist.

In einer bevorzugten Ausführung kann die Antriebseinheit ein Gehäuse aufweisen, in das die Abtriebswelle der elektrischen Maschine und/oder die Kupplungswelle wenigstens teilweise hineinragen. Das Gehäuse kann mit einem Verbrennungskraftmaschinengehäuse verbunden werden. Folglich ist die Antriebseinheit als ein gegenüber der Verbrennungskraftmaschine separates Modul ausgebildet und kann auf einfache Weise mit dieser verbunden, insbesondere verschraubt werden.

Die elektrische Maschine, die bevorzugt außerhalb des Gehäuses der Antriebseinheit angeordnet sein kann, kann durch das Gehäuse der Antriebseinheit getragen werden. Insbesondere kann durch ein Lagern des in das Gehäuse eindringenden Teils der Abtriebswelle, insbesondere des auf der Abtriebswelle angebrachten Zahnrads, ein Tragen der elektrischen Maschine ausschließlich durch das Gehäuse der Antriebseinheit erzielt werden. Zusätzlich ist die elektrische Maschine, insbesondere das Gehäuse bzw. der Stator der elektrischen Maschine, mit dem Gehäuse der Antriebseinheit starr verbunden. Die elektrische Maschine ist somit vorzugsweise ausschließlich auf dem Gehäuse der Antriebseinheit lastabtragend gehaltert. Die elektrische Maschine ist also nicht gegenüber umliegenden Fahrzeug- bzw. Rahmenteilen oder gegenüber Gehäuseabschnitten der Verbrennungskraftmaschine abgestützt, sondern steht quasi vom Gehäuse der lastaufnehmenden Antriebseinheit ab. Alternativ wäre es auch möglich, dass die elektrische Maschine vollständig innerhalb des Gehäuses der Antriebseinheit angeordnet ist.

Die elektrische Maschine kann in einem Bauraum angeordnet sein, der sich zwischen dem Gehäuse der Antriebseinheit und dem Verbrennungskraftmaschinengehäuse ausbildet. Um dies leichter zu ermöglichen, kann in dem Antriebsgehäuse eine Einbuchtung zur Aufnahme der elektrischen Maschine vorgesehen sein. Der Bauraum ist derart ausgebildet, dass die elektrische Maschine in diesem derart angeordnet ist, dass diese nicht von der Verbrennungskraftmaschine in einer Radialrichtung zur Mittelachse der Abtriebswelle hervorsteht. Insbesondere kann die elektrische Maschine derart in dem Bauraum angeordnet sein, dass eine Umfangsfläche des Gehäuses der elektrischen Maschine bündig mit der entsprechenden Umfangsfläche des Verbrennungskraftmaschinengehäuses ist.

In einer bevorzugten Ausführung kann das Gehäuse der Antriebseinheit zwei Gehäuseabschnitte aufweisen. Die Lagerung der Abtriebswelle der elektrischen Maschine und/oder des Zwischenzahnrads und/oder der Kupplungseinheit, insbesondere der Kupplungswelle, im Gehäuse kann derart erfolgen, dass ein Lager in einem Gehäuseabschnitt und ein anderes Lager in einem anderen Gehäuseabschnitt gelagert sind. Durch eine derartige Ausbildung des Gehäuses wird eine einfache Montage der Bauteile der Antriebseinheit ermöglicht. Bei den Lagern kann es sich um Radiallager, insbesondere Radialkugellager handeln. Natürlich sind auch andere Lagertypen zum Lagern der zuvor genannten Bauteile geeignet.

Die Antriebseinheit und die Verbrennungskraftmaschine bilden zusammen eine Hybridantriebseinheit. Die Antriebseinheit oder die Hybridantriebseinheit können in einem Wasserfahrzeug eingesetzt werden.

In der Zeichnung ist der Erfindungsgegenstand schematisch dargestellt und wird anhand der Figuren nachfolgend beschrieben, wobei gleiche oder gleich wirkende Elemente zumeist mit denselben Bezugszeichen versehen sind.

Dabei zeigen:
- Fig. 1: eine perspektivische Ansicht auf die erfindungsgemäße Antriebseinheit und ein Verbrennungskraftmaschinengehäuse;
- Fig. 2: eine Schnittansicht einer Kupplungseinheit;
- Fig. 3: eine Schnittansicht der Antriebseinheit;
- Fig. 4: eine perspektivische Darstellung eines Schaltmittels;
- Fig. 5: eine Ansicht des in der Antriebseinheit eingebauten Schaltmittels;
- Fig. 6: eine Schnittansicht der Antriebseinheit, die mit einem Getriebe gekoppelt ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

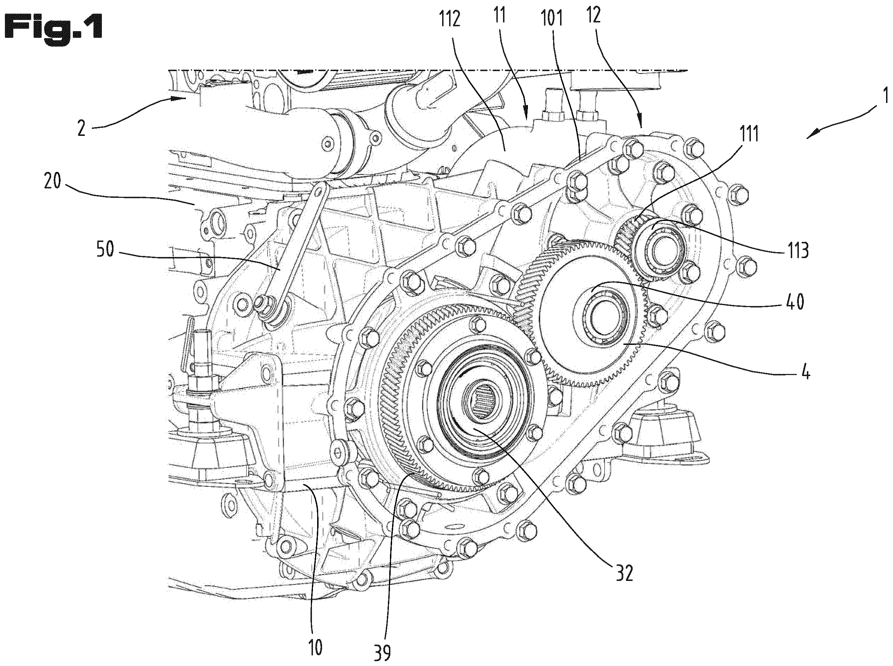

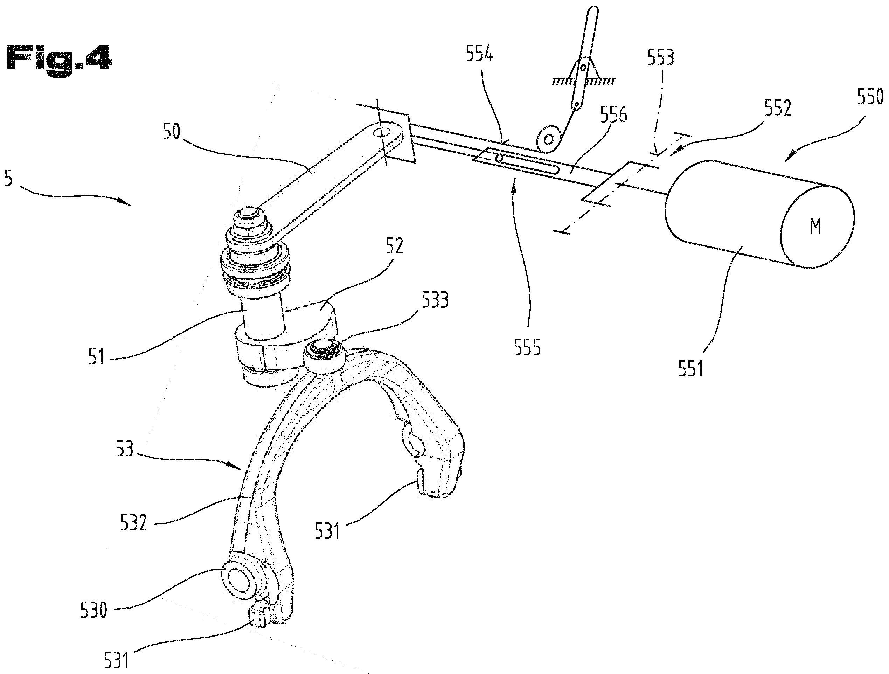

Die in Figur 1 gezeigte Antriebseinheit 1 weist ein Gehäuse 10 und eine elektrische Maschine 11 auf. Das Gehäuse 10 der Antriebseinheit 1 ist mit einem Verbrennungskraftmaschinengehäuse 20 einer Verbrennungskraftmaschine 2 verbunden. Die Antriebseinheit 1 bzw. deren Gehäuse 10 weist an ihrer der Verbrennungskraftmaschine 2 zugewandten Seite eine Einbuchtung 12 auf. Die elektrische Maschine 11 ist in Bezug auf die Längsrichtung der Verbrennungskraftmaschine 2 bzw. in Bezug auf die Längsachse der Kurbelwelle der Verbrennungskraftmaschine 2 zwischen dem Gehäuse 10 der Antriebseinheit 1 und der Verbrennungskraftmaschine 2 vorgesehen. Genauer gesagt ist die elektrische Maschine 11 in der Einbuchtung 12 angeordnet und mit dem Gehäuse 10 der Antriebseinheit 1 fest verbunden. Aus dem Gehäuse 10 der Antriebseinheit 1 ragt ein Hebel 50 eines in Figur 4 gezeigten Schaltmittels 5.

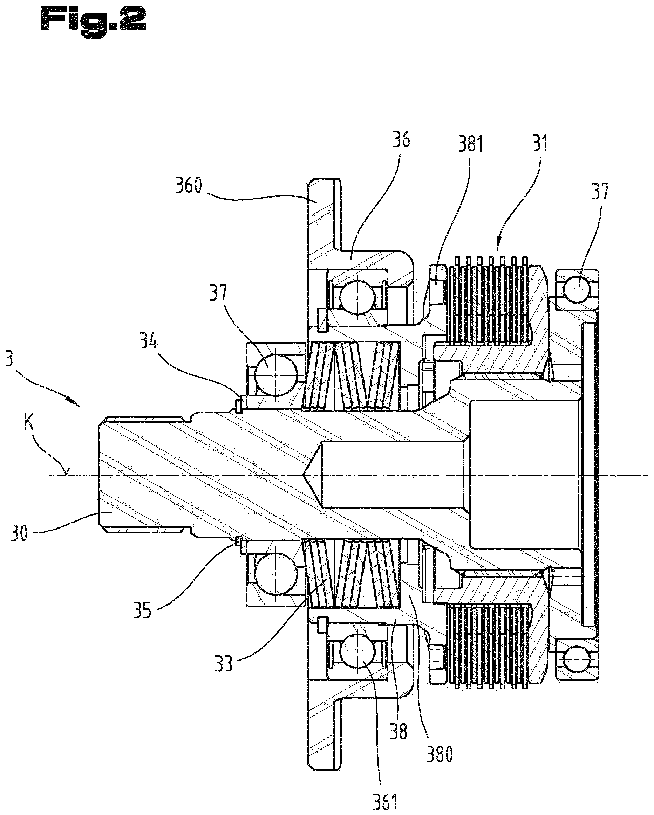

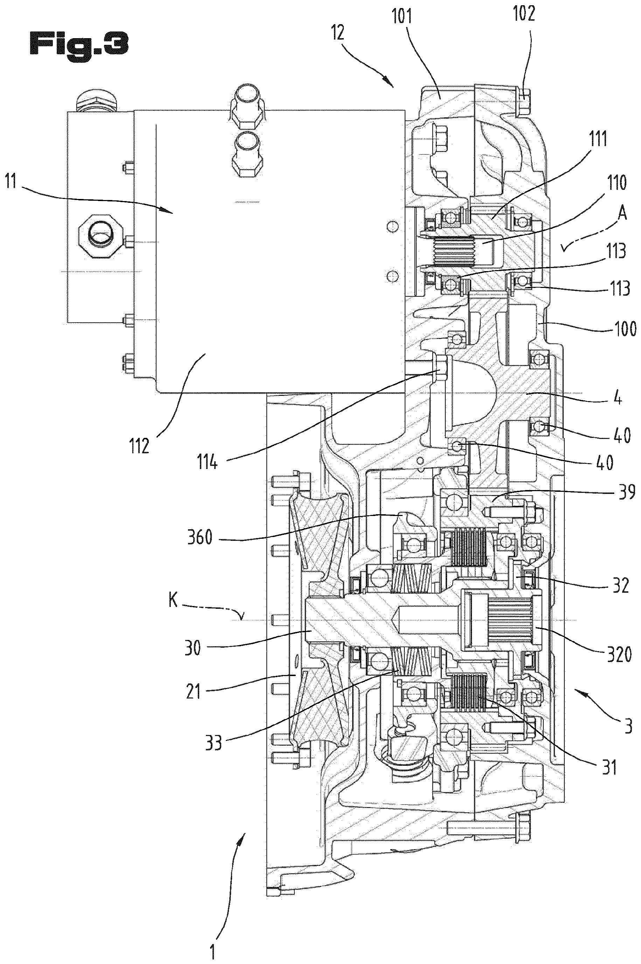

In Figur 2 ist eine Schnittansicht einer Kupplungseinheit 3 dargestellt. Die Kupplungseinheit 3 weist eine Kupplungswelle 30 auf, die mit einer in den Figuren nicht gezeigten Abtriebswel le der Verbrennungskraftmaschine 2 verbunden werden kann. Die Verbindung der Kupplungswelle 30 mit der Abtriebswelle der Verbrennungskraftmaschine 2 kann durch eine formschlüssige Verbindung erfolgen. Die Kupplungswelle 30 weist an ihrem der Verbrennungskraftmaschine 2 abgewandten Ende einen Hohlraum auf, in den das in Figur 3 gezeigte Getriebekupplungsmittel 32 eindringt. Ferner trägt die Kupplungswelle 30 ein Kupplungsmittel 31, das als Lamellenkupplung ausgebildet ist, und wenigstens ein federelastisches Spannmittel, insbesondere ein Federpaket 33. Das Kupplungsmittel 31 wird von der Kupplungswelle 30 getragen. Des Weiteren ist das Kupplungsmittel 31 mit einem in Figur 3 gezeigten Kupplungszahnrad 39 verbunden. Das Federpaket 33 ist in Radialrichtung von einer Mittelachse K der Kupplungswelle 30 gesehen zwischen der Kupplungswelle 30 und einem hülsenförmig ausgebildeten Kraftübertragungsmittel 38 angeordnet. In Axialrichtung gesehen, ist das Federpaket 33 zwischen einem Lager 37 der Kupplungswelle 30 und einem Vorsprung 380 des Kraftübertragungsmittels 38 angeordnet. Dabei erfolgt die Anordnung des Federpakets 33 in der Kupplungseinheit 3 in axialer Richtung gesehen derart, dass das reibschlüssig wirkende Kupplungsmittel 31, insbesondere ein Paket aus scheibenförmigen Reiblamellen, vorgespannt ist.

Die Höhe der Vorspannung kann über das Lager 37 durch wenigstens eine auf der Kupplungswelle 30 vorgesehene Einstellscheibe 34 eingestellt werden. Ein axiales Verschieben der wenigstens einen Einstellscheibe 34 in eine Richtung weg von dem Federpaket 33 wird durch einen Sicherungsring 35 verhindert. Das Kraftübertragungsmittel 38 ist entlang einer Mittelachse K der Kupplungswelle 30 axial verschieblich ausgebildet und weist einen Flansch 381 auf, der mit dem Kupplungsmittel 31, insbesondere mit der Lamellenkupplung, in Kontakt gebracht werden kann. Infolge der Vorspannung des Federpakets 33 und damit der Krafteinwirkung auf das Kraftübertragungsmittel 38 über den Vorsprung 380 drückt der Flansch 381 gegen das Kupplungsmittel 31, so dass sich das Kupplungsmittel 31 in einem gekoppelten Zustand befindet bzw. stetig in den koppelnden Zustand gedrängt wird.

Die Kupplungseinheit 3 weist darüber hinaus eine Buchse 36 mit einem abstehenden Abschnitt 360 auf. Die Buchse 36 ist in Radialrichtung von der Mittelachse K der Kupplungswelle 30 gesehen von der Mittelachse K weiter entfernt als das Kraftübertragungsmittel 38. Zwischen der Buchse 36 und dem Kraftübertragungsmittel 38 ist ein Lager 361 angeordnet, so dass sich die Buchse 36 bezüglich dem Kraftübertragungsmittel 38 drehen kann. Die Buchse 36 ist analog dem Kraftübertragungsmittel 38 entlang der Mittelachse K der Kurbelwelle 30 axial verschieblich. Die Lagerung der Kupplungswelle 30 erfolgt mittels zweier zueinander beabstandeter Lager 37. Die zuvor genannten Lager 37 sind als Radiallager ausgebildet.

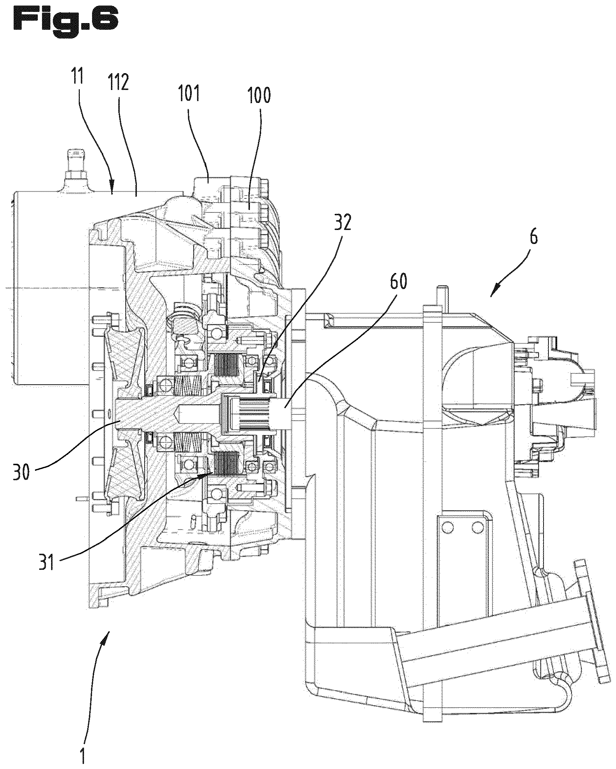

Wie aus Figur 3 ersichtlich ist, ist das Kupplungszahnrad 39 sowohl mit dem Kupplungsmittel 31, insbesondere der Lamellenkupplung, als auch mit dem Getriebekupplungsmittel 32 drehfest verbunden. Das Getriebekupplungsmittel 32 ist koaxial zur Kupplungswelle 30 ausgebildet und ragt teilweise in den Hohlraum der Kupplungswelle 32. Dabei ist das Getriebekupplungsmittel 32 derart ausgebildet, dass der in den Hohlraum der Kupplungswelle 30 ragende Abschnitt nicht in Drehverbindung mit der Kupplungswelle 30 steht, so dass sichergestellt ist, dass keine Drehbewegung der Kupplungswelle 30 direkt von dieser auf das Getriebekupplungsmittel 32 übertragen wird, wenn das Kupplungsmittel 31 inaktiv, d.h. gelöst bzw. entspannt ist. Das Getriebekupplungsmittel 32 weist einen Aufnahmeabschnitt 320 auf, in den eine in Figur 6 gezeigte Eingangswelle 60 des Getriebes 6 eindringen kann. An dem vom Getriebekupplungsmittel 32 entfernten Ende der Kupplungswelle 30 ist ein Schwingungsdämpfer 21 angeordnet.

Das Kupplungszahnrad 39 kämmt mit einem Zwischenzahnrad 4, das in der Antriebseinheit 1 zwischen der elektrischen Maschine 11 und der Kupplungseinheit 3 angeordnet ist. Das Zwischenzahnrad 4 ist in dem Gehäuse 10 der Antriebseinheit 1 über Lager 40, insbesondere Radiallager, gelagert.

Die elektrische Maschine 11 ist außerhalb des vorzugsweise schmierölgefüllten Gehäuses 10 der Antriebseinheit 1 angeordnet und weist eine Abtriebswelle 110 auf, die teilweise in den Hohlraum des Gehäuses 10 ragt. Der in das Gehäuse 10 ragende Abschnitt der Abtriebswelle 110 ist mit einem Zahnrad 111, insbesondere formschlüssig, verbunden. Die Abtriebswelle 110 und das Zahnrad 111 drehen sich um eine Mittelachse A der Abtriebswelle 110. Die komplette elektrische Maschine 11 wird durch das Gehäuse 10 der Antriebseinheit 1 getragen. Genauer gesagt erfolgt eine Lagerung des Zahnrads 111 und damit der Abtriebswelle 110 über zueinander distanzierte Radiallager 113 in dem Gehäuse 10 der Antriebseinheit 1. Da die Lagerung der kompletten elektrischen Maschine 11 über die Radiallager 113 erfolgt, ist das Gehäuse 10 in den Abschnitten, wo die Lager 113 angeordnet sind, teilweise verstärkt ausgebildet, beispielsweise mit Versteifungsrippen versehen.

Die Abtriebswelle 110 und die Kupplungswelle 30 sind derart angeordnet, dass ihre Mittelachsen A, K versetzt zueinander sind. Dabei verläuft die Mittelachse der Abtriebswelle A parallel zu der Mittelachse der Kupplungswelle K.

Weiters ist es zweckmäßig, die Abtriebswelle 110 der elektrischen Maschine 11 und die Abtriebswelle bzw. die Drehachse der Kurbelwelle der Verbrennungskraftmaschine 2 parallel zueinander anzuordnen und in die gleiche Richtung bzw. mit gleicher Orientierung auszurichten, wobei die Antriebseinheit 1die beiden parallel zueinander angeordneten Kraftmaschinen mittels der Kupplungseinheit 3 in Bezug auf das jeweils bereitgestellte Drehmoment bedarfsweise koppelt oder entkoppelt. Das heißt, dass die Abtriebseite der Verbrennungskraftmaschine 2 und die Abtriebseite der elektrischem Maschine 11 einer einheitlichen Seite bzw. einer gemeinsamen Gehäusewand der Antriebseinheit 1 zugeordnet sind. Die Antriebseinheit 1 bzw. deren Gehäuse 10 stellt somit vorzugsweise einen stirnseitigen bzw. distalen Abschluss dieses Doppel- bzw. Parallel-Aggregates dar, wodurch an die Antriebseinheit 1 beispielsweise ein nachgeschaltetes Getriebe bzw. ein daran anschließender Antriebsstrang aufgrund eines relativ uneingeschränkten Bauraumes problemlos anbindbar ist.

Das Gehäuse 10 weist einen ersten bzw. vorderen Gehäuseabschnitt 100 und einen zweiten bzw. hinteren Gehäuseabschnitt 101 auf, die über Schrauben 102 miteinander verbunden sind. Diese Gehäuseabschnitte 100, 101 bilden im wesentlichen Halbschalen aus, welche im zusammengefügten Zustand das Gehäuse 10 der Antriebseinheit 1 ausbilden. Der hintere Gehäuseabschnitt 101 ist über Schrauben 114 mit einem Gehäuse 112 der elektrischen Maschine 11 verbunden. Die Lagerung der Abtriebswelle 110, der Kupplungswelle 30 und des Zwischenzahnrads 4 erfolgt derart, dass jeweils ein Lager auf dem vorderen Gehäueseabschnitt 100 und das jeweils andere, distale Lager auf dem hinteren Gehäuseabschnitt 101 angeordnet ist.

In Figur 4 erfolgt eine perspektivische Darstellung eines Schaltmittels 5, mittels dem die in Figur 2 gezeigte Kupplungseinheit 3 vom gekoppelten Zustand in einen ungekoppelten Zustand überführt werden kann. Das Schaltmittel 5 weist einen Hebel 50 auf. Der Hebel 50 ist über eine Welle 51 mit einer Nocke 52 verbunden. Bei einer Drehung des Hebels 50 dreht sich zwangsweise die Welle 51 und damit die Nocke 52. Eine Drehung des Hebels 50 kann durch ein in Figur 4 schematisch angedeutetes Betätigungsmittel, insbesondere durch einen elektrisch antreib- bzw. aktivierbaren Aktuator 550 erfolgen.

Ferner weist das Schaltmittel 5 ein gabelförmiges Übertragungsmittel 53 auf. Das gabelförmige Übertragungsmittel 53 weist eine Schaltgabel 532 und ein Nockengegenstück 533 auf. Die Schaltgabel 532 weist im Wesentlichen eine U-Form mit einer Basis und zwei sich von der Basis erstreckenden Schenkeln auf. Das Nockengegenstück 533 ist auf der Schaltgabel 532 derart angeordnet, dass bei einer Drehung des Hebels 50 über die Nocke 52 auf das Nockengegenstück 533 eine Stellkraft ausgeübt wird. Insbesondere ist das Nockengegenstück 533 auf der Basis der Schaltgabel 532 angeordnet. An den beiden Schenkeln der Schaltgabel 532 ist jeweils ein Drehlager 530 angeordnet, über das sich die Schaltgabel 532 drehen kann. An den von der Basis entfernten Enden der beiden Schenkel der Schaltgabel 532 ist jeweils ein Drucklager 531 angeordnet.

Zweckmäßig ist es, wenn das Schaltmittel 5 wahlweise manuell via Muskelkraft oder via das menschliche Körpergewicht und außerdem mittels einem elektrisch betreibbaren Aktuator 550 betätigbar ist. Dabei kann der elektrische Aktuator 550 als Stellmotor 551, insbesondere als Elektromotor mit einem Spindelgetriebe ausgeführt sein, dessen Spindelmutter mit dem Schaltmittel 5 bewegungsgekoppelt ist: Gegebenenfalls ist eine manuell lösbare Kupplungsverbindung 552, beispielsweise eine Bolzenverbindung 553 mit Splintsicherung ausgebildet, durch welche das Schaltmittel 5 bei Bedarf vom elektrischen Aktuator 550 trennbar, insbesondere manuell und werkzeuglos entkoppelbar ist.

Entsprechend einer vorteilhaften Weiterbildung ist das Schaltmittel 5 mittels einem hebeluntersetzten Seilzug 554, mittels einem Gestänge, mittels einer hydraulischen Zylinderanordnung aus Geber- und Nehmerzylinder oder mittels einem ähnlichen Kraftübertragungsmittel 555 unter Aufbringung von manueller Betätigungskraft schaltbar, wodurch das Kupplungsmittel 31 - Fig. 3 - durch rein manuelle Betätigungskraft bzw. durch die Gewichtskraft einer Bedienperson in den entkoppelnden Zustand überführbar ist. Somit ist die Verbrennungskraftmaschine 2 gesichert in den antriebsmäßig abgekoppelten Zustand überführbar. Um einen parallelen, wahlweise Betätigung des manuell zu verstellenden Kraftübertragungsmittels 555 und des elektrisch zu verstellenden Aktuators 550, insbesondere eines Spindelmotors 551, zu ermöglichen, ist das Kraftübertragungsmittel 555 zugfest, jedoch stauch- bzw. verkürzbar ausgeführt. Insbesondere kann als Kraftübertragungsmittel 555 zwischen dem Aktuator 550 und dem Hebel 50 des Schaltmittels 5 eine Seil- oder Kettenverbindung, oder eine sonstiges Zugkräfte zwar übertragendes, gegenüber Stauch- oder Schubkräften jedoch entkoppelndes Kraftübertragungsmittel 550 vorgesehen sein. Ein solches Kraftübertragungsmittel 550 kann dabei auch durch ein teleskopisches Zugorgan 556 gebildet sein, welches Zugkräfte überträgt und Schubkräfte in sich aufnimmt bzw. durch teleskopische Verkürzung seiner Länge ausgehend von seinem ersten Ende nicht auf sein distales Ende überträgt, wie dies in Fig. 4 schematisch angedeutet wurde.

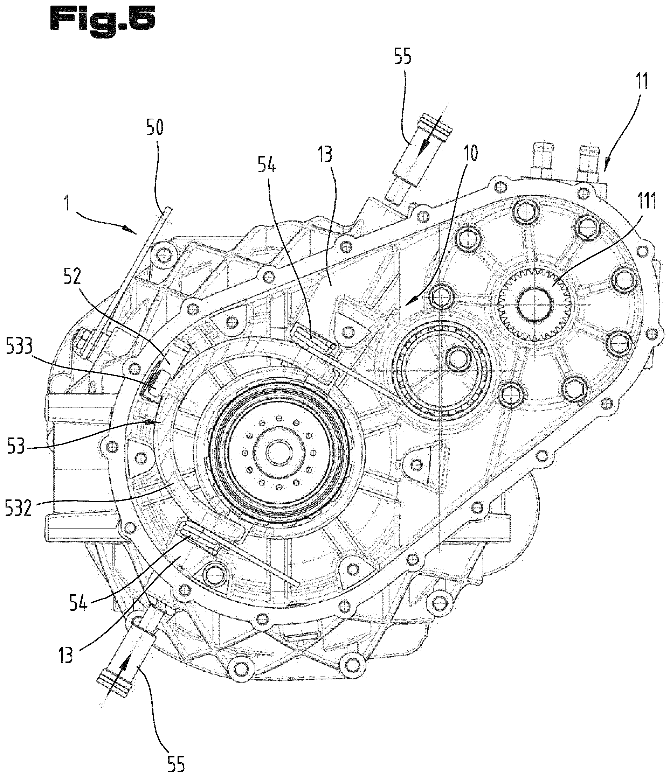

Figur 5 zeigt das Schaltmittel 5 in einem in der Antriebseinheit 1 eingebauten Zustand. Wie aus Figur 5 zu entnehmen ist, erfolgt eine Fixierung des Schaltmittels 5 in wenigstens einem zylinderförmigen Fixierabschnitt 13 des Gehäuses 10 der Antriebseinheit 1 über Bolzen 55. Genauer gesagt werden die Bolzen 55 in den jeweiligen zylinderförmigen Fixierabschnitt 13 eingeführt und gelangen in Kontakt mit dem Drehlager 530 der Schaltgabel 532. Eine Feder 54 ist mit der Schaltgabel 532 derart gekoppelt, dass sichergestellt ist, dass nach einer Rückbewegung des Hebels 50 in seine unausgelenkte Stellung die Schaltgabel 532 ebenfalls in die unausgelenkte Stellung gedreht wird.

In Figur 6 wird eine Seitenansicht der Antriebseinheit 1 gezeigt, die mit einem Getriebe 6 gekoppelt ist. Dabei ragt die Eingangswelle 60 des Getriebes 6 in den Aufnahmeabschnitt 320 des Getriebekupplungsmittels 32 und ist mit dem Getriebekupplungsmittel 32 drehfest verbunden. Die Verbindung kann formschlüssig erfolgen.

Im Folgenden wird die Betriebsweise der erfindungsgemäßen Antriebseinheit erläutert. Auch wenn die Erläuterung unter Zuhilfenahme der Bezugszeichen erfolgt, ist die Betriebsweise nicht auf die in den Figuren dargestellte Ausführung begrenzt.

Die Antriebseinheit 1 kann in drei verschiedenen Zuständen betrieben werden. In einem ersten Betriebszustand wird sowohl das Drehmoment der Verbrennungskraftmaschine 2 als auch das Drehmoment der elektrischen Maschine 11 auf die Eingangswelle 60 des Getriebes 6 bzw. auf einen Antriebsstrang eines Fahrzeuges übertragen. In einem zweiten Betriebszustand wird nur das Drehmoment der Verbrennungskraftmaschine 2 und in einem dritten Betriebszustand nur das Drehmoment der elektrischen Maschine 11 auf die Eingangswelle 60 des Getriebes 6 übertragen.

Bei einem Betrieb der Antriebseinheit 1 in dem ersten Betriebszustand wird das Drehmoment der Abtriebswelle der Verbrennungskraftmaschine 2 auf die Kupplungswelle 30 der Kupplungseinheit 3 und damit das Kupplungsmittel 31 übertragen. Da das Federpaket 33 im vorgespannten Zustand ist und damit der Flansch 381 des Kraftübertragungsmittels 38 eine Kraft auf das Kupplungsmittel 31 ausübt, befindet sich dieses in einem gekoppelten bzw. kuppelnden Zustand. Somit wird das Drehmoment der Kupplungswelle 30 über das Kupplungsmittel 31 auf das Kupplungszahnrad 39 übertragen. Da das Getriebekupplungsmittel 32 mit dem Kupplungszahnrad 39 drehfest verbunden ist, wird letztendlich das Drehmoment der Kupplungswelle 30 auf das Getriebekupplungsmittel 32 und auf die mit dem Getriebekupplungsmittel 32 verbundene Eingangswelle 60 des Getriebes 6 übertragen. Das Drehmoment der elektrischen Maschine 11 wird über die Abtriebswelle 110 bzw. das mit der Abtriebswelle 110 verbundene Zahnrad 111 auf das Zwischenzahnrad 4 übertragen. Da das Zwischenzahnrad 4 mit dem Kupplungszahnrad 39 kämmt, wird das Drehmoment von dem Zwischenzahnrad 4 auf das Kupplungszahnrad 39 und damit auf das Getriebekupplungsmittel 32 übertragen.

In dem zweiten Betriebszustand erfolgt eine Drehmomentübertragung von der Abtriebswelle der Verbrennungskraftmaschine 2 zu der Eingangswelle 60 des Getriebes 6 analog zu dem zuvor beschriebenen ersten Betriebszustand. Der einzige Unterschied zwischen den beiden Betriebszuständen ist, dass in dem zweiten Betriebszustand von der elektrischen Maschine 11 kein Drehmoment zur Verfügung gestellt wird. In diesem Zustand wird von der elektrischen Maschine 11 keine elektrische Energie verbraucht bzw. aufgenommen. Das von der Verbrennungskraftmaschine 2 auf das Kupplungszahnrad 39 aufgebrachte Drehmoment wird neben dem Getriebekupplungsmittel 32 auch noch auf das Zwischenzahnrad 4 und damit auf das Zahnrad 111 der Abtriebswelle 110 der elektrischen Maschine 11 übertragen. Dadurch wird erreicht, dass sich die Abtriebswelle 110 der elektrischen Maschine 11 bei einer Drehung der Abtriebswelle der Verbrennungskraftmaschine 2 dreht. Die Drehung der Abtriebswelle 110 der elektrischen Maschine 11 kann dabei als Schwungmasse für die Verbrennungskraftmaschine 2 verwendet werden.

In dem dritten Betriebszustand erfolgt, wie oben bereits genannt, nur eine Drehmomentübertragung des Drehmoments der elektrischen Maschine 11 auf das Getriebekupplungsmittel 32 und damit auf die Eingangswelle 60 des Getriebes 6. Durch eine Betätigung des Schaltmittels 5 wird das Kupplungsmittel, insbesondere die Lamellenkupplung, in einen ungekoppelten bzw. entkoppelnden Zustand überführt, so dass keine Drehmomentübertragung von der Kupplungswelle 30 auf das Kupplungszahnrad 39 mehr erfolgt. Die Drehmomentübertragung von der Abtriebswelle 110 der elektrischen Maschine 11 auf das Getriebekupplungsmittel 32 erfolgt in der für den ersten Betriebszustand beschriebenen Art und Weise.

Eine Entkopplung der Kupplungswelle 30 von dem Kupplungszahnrad 39 mittels des Schaltmittels 5 kann wie folgt erfolgen. Die Betätigung des Schaltmittels 5 über ein Betätigungsmittel kann manuell oder elektrisch erfolgen. Bei der Betätigung wird der Hebel 50 des Schaltmittels 5 gedreht. Infolge der Drehung des Hebels 50 dreht sich die Nocke 52, so dass über das Nockengegenstück 533 eine Kraft auf das gabelförmige Übertragungsmittel 53 ausgeübt wird, die zu einer Drehung des Übertragungsmittels 53 führt. Dabei dreht sich das gabelförmige Übertragungsmittel 53 um das Drehlager 533. Bei der Drehung des Übertragungsmittels 53 drücken die Drucklager 531 auf den abstehenden Abschnitt 360 der Buchse 36 entgegen der Federkraft des Federpakets 33. Da die von dem Übertragungsmittel ausgeübte Kraft größer ist als die Federkraft des Federpaketes 33, bewegt sich das Kraftübertragungsmittel 38 axial in eine Richtung weg von dem Kupplungsmittel 31. D.h., dass der Flansch 381 des Kraftübertragungsmittels 38 nicht mehr gegen das Kupplungsmittel 31 drückt. Somit wird bei einer Ausbildung des Kupplungsmittels 38 als Lamellenkupplung erreicht, dass die Lamellen nicht mehr aneinander gepresst werden, und somit nicht mehr das Drehmoment der Kupplungswelle 30 auf das Kupplungszahnrad 39 übertragen können. Somit befindet sich die Lamellenkupplung in einem ungekoppelten bzw. entkoppelnden Zustand.

Bei einem Bewegen des Schaltmittels 5 in seine Anfangsposition wird von der Nocke 52 keine Kraft auf das Nockengegenstück 533 ausgeübt. Eine Drehung des gabelförmigen Übertragungsmittels 53 in seine Ausgangsstellung wird durch die Feder 54 sichergestellt. Infolge der Rückdrehung des Übertragungsmittels 53 in die Ausgangsstellung wird von den Drucklagern 531 keine Kraft auf den abstehenden Abschnitt 360 der Buchse 36 ausgeübt. Durch das Federpaket 33 wird eine Kraft auf den Vorsprung 380 des Kraftübertragungsmittels 38 ausgeübt, die bewirkt, dass sich das Kraftübertragungsmittel 38 und damit auch die Buchse 36 in Richtung zum Kupplungsmittel 31 bewegen. Eine Bewegung der Buchse 36 wird dadurch erreicht, dass diese über das Lager 37 mit dem Kraftübertragungsmittel 38 kraftschlüssig verbunden ist. Dabei bewegt sich das Kraftübertragungsmittel 38 solange in Richtung zum Kupplungsmittel 31 bis durch den Flansch 381 eine ausreichend hohe Kraft auf das Kupplungsmittel 31 übertragen wird, die sicherstellt, dass sich das Kupplungsmittel 31 in einem gekoppelten, das jeweilige Drehmoment übertragenden Zustand befindet.

Die Ausführungsbeispiele zeigen mögliche Ausführungsvarianten der Antriebseinheit 1, wobei an dieser Stelle bemerkt sei, dass die Erfindung nicht auf die speziell dargestellte Ausführungsvariante eingeschränkt ist.

Der Ordnung halber sei abschließend darauf hingewiesen, dass zum besseren Verständnis des Aufbaus der Antriebseinheit 1 diese bzw. deren Bestandteile teilweise unmaßstäblich und/oder vergrößert und/oder verkleinert dargestellt wurden.

**Bezugszeichenaufstellung**

| | | | |
|---|---|---|---|
| 1 | Antriebseinheit | 111 | Zahnrad |
| 2 | Verbrennungskraftmaschine | 112 | Gehäuse der elektrischen Maschine |
| 3 | Kupplungseinheit | | |
| 4 | Zwischenzahnrad | 113 | Lager der elektrischen Maschine |
| 5 | Schaltmittel | 114 | Schraube |
| | | 320 | Aufnahmeabschnitt |
| 6 | Getriebe | | |
| 10 | Gehäuse der Antriebseinheit | 360 | abstehender Abschnitt |
| 11 | elektrische Maschine | 380 | Vorsprung |
| 12 | Einbuchtung | 381 | Flansch |
| 13 | Fixierabschnitt | 530 | Drehlager |
| | | 531 | Drucklager |
| 20 | Verbrennungskraftmaschinengehäuse | 532 | Schaltgabel |
| 21 | Schwingungsdämpfer | 533 | Nockengegenstück |
| 30 | Kupplungswelle | 550 | Aktuator |
| 31 | Kupplungsmittel | 551 | Stellmotor |
| 32 | Getriebekupplungsmittel | 552 | Kupplungsverbindung |
| 33 | Federpaket | 553 | Bolzenverbindung |
| 34 | Einstellscheibe | 554 | Seilzug |
| 35 | Sicherungsring | 555 | Kraftübertragungsmittel |
| 36 | Buchse | 556 | teleskopisches Zugorgan |
| 360 | abstehender Abschnitt | | |
| 361 | Lager | A | Mittelachse der Abtriebswelle der elektrischen Maschine |
| 37 | Lager der Kupplungseinheit | K | Mittelachse der Kupplungs-welle |
| 38 | Kraftübertragungsmittel | | |
| 39 | Kupplungszahnrad | | |
| 40 | Lager des Zwischenzahnrads | | |
| 50 | Hebel | | |
| 51 | Welle | | |
| 52 | Nocke | | |
| 53 | gabelförmige Übertragungseinheit | | |
| 54 | Feder | | |
| 55 | Bolzen | | |
| | | | |
| 60 | Eingangswelle | | |
| 100 | vorderer Gehäuseabschnitt | | |
| 101 | hinterer Gehäuseabschnitt | | |
| 102 | Schraube | | |
| 110 | Abtriebswelle der elektrischen Maschine | | |

## Patentansprüche

1. Antriebseinheit (1) eines Wasserfahrzeuges, mit einer elektrischen Maschine (11), die eine Abtriebswelle (110) aufweist, und mit einer Kupplungseinheit (3), die wenigstens eine Kupplungswelle (30) aufweist, wobei die Kupplungseinheit (3) mit der Abtriebswelle (110) der elektrischen Maschine (11) gekoppelt und über die Kupplungswelle (30) mit einer Abtriebswelle einer Verbrennungskraftmaschine (2) koppelbar ist, wobei die Abtriebswelle (110) der elektrischen Maschine (11) und die Kupplungseinheit (3) derart angeordnet sind, dass eine Mittelachse (A) der Abtriebswelle (110) der elektrischen Maschine (11) radial versetzt zu einer Mittelachse (K) der Kupplungswelle (30) ist, und die Kupplungseinheit (3) ein Kupplungsmittel (31), insbesondere eine Lamellenkupplung, zum wahlweisen Koppeln und Entkoppeln der Verbrennungskraftmaschine (2) mit der bzw. von der elektrischen Maschine (11) aufweist, wobei der bewegungskoppelnde Aktivzustand durch den Ruhezustand des Kupplungsmittels (31) gebildet ist, sodass in diesem Ruhe- und Aktivzustand des Kupplungsmittels (31) eine Bewegungskopplung der Kupplungswelle (30) mit der Abtriebswelle (110) der elektrischen Maschine (11) erfolgt, und weiters ein Schaltmittel (5) vorgesehen ist, das mit dem Kupplungsmittel (31) gekoppelt ist, **dadurch gekennzeichnet, dass** das Schaltmittel (5), welches zur Überführung des Kupplungsmittels (31) von dem koppelnden Aktivzustand in einen entkoppelnden Zustand ausgebildet ist, wahlweise manuell und mittels einem elektrischen Aktuator (550) betätigbar ist.

2. Antriebseinheit (1) nach Anspruch 1, **dadurch gekennzeichnet, dass** die elektrische Maschine (11) über ein Stirnradgetriebe mit der Verbrennungskraftmaschine (2) koppelbar ist.

3. Antriebseinheit (1) nach einem der vorhergehenden Ansprüche, **dadurch gekennzeichnet, dass** die Kupplungswelle (30) koaxial zu der Abtriebswelle der Verbrennungskraftmaschine (2) und/oder koaxial zu einer Eingangswelle (60) eines Getriebes (6), insbesondere eines Schaltgetriebes, anordenbar ist.

4. Antriebseinheit (1) nach einem der vorhergehenden Ansprüche, **dadurch gekennzeichnet, dass** zwischen der Abtriebswelle (110) der elektrischen Maschine (11) und der Kupplungseinheit (3) wenigstens ein Zwischenzahnrad (4) angeordnet ist, das mit einem Zahnrad (111) der Abtriebswelle (110) der elektrischen Maschine (11) und mit der Kupplungseinheit (3), insbesondere einem Kupplungszahnrad (39) der Kupplungseinheit (3), kämmt.

5. Antriebseinheit (1) nach einem der vorhergehenden Ansprüche, **dadurch gekennzeichnet, dass** die Kupplungseinheit (3) ein Getriebekupplungsmittel (32) aufweist, wobei die Kupplungswelle (30) und/oder die Abtriebswelle (110) der elektrischen Maschine (11) über das Getriebekupplungsmittel (32) mit einer Eingangswelle (60) eines Getriebes (6), insbesondere eines Schaltgetriebes, koppelbar sind.

6. Antriebseinheit (1) nach Anspruch 1, **dadurch gekennzeichnet, dass** das Kupplungsmittel (31) zwischen der Kupplungswelle (30) und der Abtriebswelle (110) der elektrischen Maschine (11), insbesondere zwischen der Kupplungswelle (30) und einem Kupplungszahnrad (39) der Kupplungseinheit (3), angeordnet ist.

7. Antriebseinheit (1) nach Anspruch 1 oder 6, **dadurch gekennzeichnet, dass** die Kupplungseinheit (3) wenigstens ein Spannmittel, insbesondere ein Federpaket (33) umfasst, dessen federelastische Vorspannung das Kupplungsmittel (31) stetig in den betätigten Aktivzustand drängt, in welchem die Verbrennungskraftmaschine (2), die Abtriebswelle (110) der elektrischen Maschine (11) und ein abgangsseitiges Getriebekupplungsmittel (32) der Antriebseinheit (1) in Bezug auf Drehbewegungen und Drehmomentübertragungen gekoppelt sind.

8. Antriebseinheit (1) nach Anspruch 1, **dadurch gekennzeichnet, dass** das Schaltmittel (5) einen Hebel (50), eine mit dem Hebel (50) gekoppelte Nocke (52) und eine, insbesondere drehbare, gabelförmige Übertragungseinheit (53) zum Übertragen einer Schaltbewegung auf das Kupplungsmittel (31) aufweist.

9. Antriebseinheit (1) nach Anspruch 1, **dadurch gekennzeichnet, dass** der elektrische Aktuator (550) als Stellmotor (551), insbesondere als Elektromotor mit einem Spindelgetriebe ausgeführt ist, dessen Spindelmutter mit dem Schaltmittel (5) bewegungsgekoppelt ist.

10. Antriebseinheit (1) nach einem der Ansprüche 1, 8 und 9, **dadurch gekennzeichnet, dass** das Schaltmittel (5) manuell mittels einem hebeluntersetzten Seilzug (554), einem Gestänge, einer hydraulischen Zylinderanordnung aus Geber- und Nehmerzylinder, oder mittels einem ähnlichen Kraftübertragungsmittel (555) unter Aufbringung von körperlicher Betätigungs- bzw. Gewichtskraft schaltbar ist, wodurch das Kupplungsmittel (31) in den entkoppelnden Zustand überführbar ist.

11. Antriebseinheit (1) nach einem der vorhergehenden Ansprüche, **dadurch gekennzeichnet, dass** die Abtriebswelle (110) der elektrischen Maschine (11) und/oder die Kupplungswelle (30) wenigstens teilweise in einem Gehäuse (10) der Antriebseinheit (1) angeordnet sind, wobei das Gehäuse (10) mit einem Verbrennungskraftmaschinengehäuse (20) verbindbar ist.

12. Antriebseinheit (1) nach einem der vorhergehenden Ansprüche, **dadurch gekennzeichnet, dass** ein Gehäuse (10) der Antriebseinheit (1) die elektrische Maschine (11) trägt und/oder die elektrische Maschine (11), insbesondere das Gehäuse (112) der elektrischen Maschine (11), mit dem Gehäuse (10) der Antriebseinheit (1) verbindbar ist.

13. Antriebseinheit (1) nach einem der vorhergehenden Ansprüche, **dadurch gekennzeichnet, dass** ein Gehäuse (10) der Antriebseinheit (1) zwei Gehäuseabschnitte (100, 101) aufweist, wobei die Lagerung (113, 37) der Abtriebswelle (110) der elektrischen Maschine (11) und/oder der Kupplungseinheit (3), insbesondere der Kupplungswelle (30), im Gehäuse (10) derart erfolgt, dass ein Lager in einem Gehäuseabschnitt (100) und ein anderes Lager in dem anderen Gehäuseabschnitt (101) angeordnet sind.

14. Hybridantriebseinheit mit einer Antriebseinheit (1) nach einem der vorhergehenden Ansprüche und einer Verbrennungskraftmaschine (2).

15. Wasserfahrzeug mit einer Antriebseinheit (1) nach einem der Ansprüche 1 bis 13 oder einer Hybridantriebseinheit nach Anspruch 14.

## Claims

1. A drive unit (1) of a water vehicle with an electric machine (11) which has a output shaft (110) and with a clutch unit (3) which has at least one clutch shaft (30), wherein the clutch unit (3) is coupled with the output shaft (110) of the electric machine (11) and can be coupled with a drive shaft of an internal combustion engine (2) via the clutch shaft (30), wherein the output shaft (110) of the electric machine (11) and the clutch unit (3) are arranged in such a manner that a central axis (A) of the output shaft (110) of the electric machine (11) is radially offset relative to a central axis (K) of the clutch shaft (30) and the clutch unit (3) has a clutch means (31), in particular a plate clutch, for the selective coupling and uncoupling of the internal combustion engine (2) with the or from the electric machine (11), respectively, wherein the movement-coupling active state is formed by the idle state of the clutch means (31), so that in this idle and active state of the clutch means (31) there is a movement coupling of the clutch shaft (30) to the output shaft (110) of the electric machine (11) and, furthermore, a shifting means (5) is provided which is coupled with the clutch means (31), **characterized in that** the shifting means (5) which is designed to move the clutch means (31) from the coupling active state into an uncoupling state can be operated either manually or by means of an electric actuator (550).

2. The drive unit (1) according to claim 1, **characterized in that** the electric machine (11) can be coupled via a spur gear unit with the internal combustion engine (2).

3. The drive unit (1) according to one of the preceding claims, **characterized in that** the clutch shaft (30) can be arranged coaxially to the output shaft of the internal combustion engine (2) and/or coaxially to an input shaft (60) of a transmission (6), in particular a shift gearbox.

4. The drive unit (1) according to one of the preceding claims, **characterized in that** between the output shaft (110) of the electric machine (11) and the clutch unit (3) is arranged at least one intermediate gear wheel (4) which meshes with a gear wheel (111) of the output shaft (110) of the electric machine (11) and with the clutch unit (3), in particular a clutch gear wheel (39) of the clutch unit (3).

5. The drive unit (1) according to one of the preceding claims, **characterized in that** the clutch unit (3) has a transmission clutch means (32), wherein the clutch shaft (30) and/or the output shaft (110) of the electric machine (11) can be coupled via the transmission clutch means (32) to an input shaft (60) of a transmission (6), in particular a shift gearbox.

6. The drive unit (1) according to claim 1, **characterized in that** the clutch means (31) is arranged between the clutch shaft (30) and the output shaft (110) of the electric machine (11), in particular between the clutch shaft (30) and a clutch gear wheel (39) of the clutch unit (3).

7. The drive unit (1) according to claim 1 or 6, **characterized in that** the clutch unit (3) comprises at least one tensioning means, in particular a spring assembly (33), the spring-elastic pretensioning of which forces the clutch means (31) constantly into the actuated active state in which the internal combustion engine (2), the output shaft (110) of the electric machine (11) and a transmission clutch means (32) on the output side of the drive unit (1) are coupled in respect of rotational movements and torque transmissions.

8. The drive unit (1) according to claim 1, **characterized in that** the shifting means (5) has a lever (50), a cam (52) coupled with the lever (50) and a fork-shaped, in particular rotatable, transmission unit (53) for transmitting a shift movement to the clutch means (31).

9. The drive unit (1) according to claim 1, **characterized in that** the electrical actuator (550) is configured as a servomotor (551), in particular as an electric motor with a spindle gear, the spindle nut whereof is movement-coupled to the shifting means (5).

10. The drive unit (1) according to one of claims 1, 8 and 9, **characterized in that** the shifting means (5) can be manually shifted by means of a Bowden cable (554) with a force-reducing lever, an arrangement of rods, a hydraulic cylinder arrangement made up of master and slave cylinders or by means of a similar force transmission means (555) with the application of human actuating force or weight, as a result of which the clutch means (31) can be moved into the uncoupling state.

11. The drive unit (1) according to one of the preceding claims, **characterized in that** the output shaft (110) of the electric machine (11) and/or the clutch shaft (30) is/are arranged at least partially in a housing (10) of the drive unit (1), wherein the housing (10) can be connected to an internal combustion engine housing (20).

12. The drive unit (1) according to one of the preceding claims, **characterized in that** a housing (10) of the drive unit (1) supports the electric machine (11) and/or the electric machine (11), in particular the housing (112) of the electrical machine (11), can be connected to the housing (10) of the drive unit (1).

13. The drive unit (1) according to one of the preceding claims, **characterized in that** a housing (10) of the drive unit (1) comprises two housing portions (100, 101), wherein the bearing (113, 37) of the output shaft (110) of the electric machine (11) and/or the clutch unit (3), in particular the clutch shaft (30), takes place in the housing (10) in such a manner that a bearing is arranged in a housing portion (100) and another bearing in the other housing portion (101).

14. A hybrid drive unit with a drive unit (1) according to one of the preceding claims and an internal combustion engine (2).

15. A water vehicle with a drive unit (1) according to one of the claims 1 to 13 or a hybrid drive unit according to claim 14.

## Revendications

1. Unité d'entraînement (1) d'un véhicule aquatique avec une machine électrique (11), qui comprend un arbre de sortie (110) et avec une unité d'embrayage (3) qui comprend au moins un arbre d'embrayage (30), l'unité d'embrayage (3) étant couplée avec l'arbre de sortie (110) de la machine électrique (11) et pouvant être couplée par l'intermédiaire de l'arbre d'embrayage (30) avec un arbre de sortie d'un moteur à combustion interne (2), l'arbre de sortie (110) de la machine électrique (11) et l'unité d'embrayage (3) étant disposée de façon à ce qu'un axe central (A) de l'arbre de sortie (110) de la machine électrique (11) soit décalé radialement par rapport à un axe central (K) de l'arbre d'embrayage (30) et l'unité d'embrayage (3) comprenant un moyen d'embrayage (31), plus particulièrement un embrayage à lamelles,, pour le couplage et le découplage sélectif du moteur à combustion interne (2) avec ou de la machine électrique (11), l'état actif à couplage de mouvement étant établi par l'état de repos du moyen d'embrayage (31), de façon à ce que, dans cet état de repos et actif du moyen d'embrayage (31), un couplage en mouvement de l'arbre d'embrayage (30) a lieu avec l'arbre de sortie (110) de la machine électrique (11) et un moyen de commande (5) étant en outre prévu, qui est couplé avec le moyen d'embrayage (31), **caractérisé en ce que** le moyen de commutation (5), qui est conçu pour le passage du moyen d'embrayage (31) de l'état actif de couplage à un état de découplage, puisse être actionné au choix manuellement et au moyen d'un actionneur électrique (550).

2. Unité d'entraînement (1) selon la revendication 1, **caractérisé en ce que** la machine électrique (11) peut être couplée avec le moteur à combustion interne (2) par l'intermédiaire d'un engrenage droit.

3. Unité d'entraînement (1) selon l'une des revendications précédentes, **caractérisé en ce que** l'arbre d'embrayage (30) peut être disposé de manière coaxiale par rapport à l'arbre de sortie du moteur à combustion interne (2) et/ou de manière coaxiale par rapport à un arbre d'entrée (60) d'un engrenage (6), plus particulièrement d'une boîte de vitesses.

4. Unité d'entraînement (1) selon l'une des revendications précédentes, **caractérisé en ce que**, entre l'arbre de sortie (110) de la machine électrique (11) et l'unité d'embrayage (3) est disposée au moins une roue dentée intermédiaire (4), qui s'engrène avec une roue dentée (111) de l'arbre de sortie (110) de la machine électrique (11) et avec l'unité d'embrayage (3), plus particulièrement une roue dentée d'embrayage (39) de l'unité d'embrayage (3).

5. Unité d'entraînement (1) selon l'une des revendications précédentes, **caractérisé en ce que** l'unité d'embrayage (3) comprend un moyen d'embrayage d'engrenage (32), l'arbre d'embrayage (30) et/ou l'arbre de sortie (110) de la machine électrique (11) pouvant être couplée par l'intermédiaire du moyen d'embrayage d'engrenage (32) avec un arbre d'entrée (60) d'un engrenage (6), plus particulièrement d'une boîte de vitesses.

6. Unité d'entraînement (1) selon la revendication 1, **caractérisée en ce que** le moyen d'embrayage (31) est disposé entre l'arbre d'embrayage (30) et l'arbre de sortie (110) de la machine électrique (11), plus particulièrement entre l'arbre d'accouplement (30) et une roue dentée d'embrayage (39) de l'unité d'embrayage (3).

7. Unité d'entraînement (1) selon la revendication 1 ou 6, **caractérisée en ce que** l'unité d'embrayage (3) comprend au moins un moyen de serrage, plus particulièrement un ensemble de ressorts (33), dont la précontrainte électrique comprime en permanence le moyen d'embrayage (31) dans l'état actif actionné, dans lequel le moteur à combustion interne (2), l'arbre de sortie (110) de la machine électrique (11) et un moyen d'embrayage d'engrenage côté sortie (32) de l'unité d'entraînement (1) sont couplés en ce qui concerne les mouvements de rotation et les transmissions de couples.

8. Unité d'entraînement (1) selon la revendication 1, **caractérisée en ce que** le moyen de commutation (5) comprend un levier (50), une came (52) couplée avec le levier (50) et une unité de transmission (53) en forme de fourche, plus particulièrement rotative, pour la transmission d'un mouvement de commutation au moyen d'embrayage (31).

9. Unité d'entraînement (1) selon la revendication 1, **caractérisée en ce que** l'actionneur électrique (550) est conçu comme un servomoteur (551), plus particulièrement comme un moteur électrique avec un engrenage à broche, dont l'écrou de broche est couplé en mouvement avec le moyen de commutation (5).

10. Unité d'entraînement (1) selon l'une des revendications 1, 8 et 9, **caractérisée en ce que** le moyen de commutation (5) peut être commandé manuellement au moyen d'un câble de traction (554) démultiplié par un levier, d'une tringlerie, d'un dispositif de vérin hydraulique constitué d'un cylindre émetteur et d'un cylindre récepteur, ou au moyen d'un moyen de transmission de forces (555) similaire en appliquant une force d'actionnement ou de gravité, ce qui permet de mettre le moyen d'embrayage (31) dans l'état découplé.

11. Unité d'entraînement (1) selon l'une des revendications précédentes, **caractérisée en ce que** l'arbre de sortie (110) de la machine électrique (11) et/ou l'arbre d'embrayage (30) sont disposés au moins partiellement dans un carter (10) de l'unité d'entraînement (1), le carter (10) pouvant être relié avec un carter de moteur à combustion interne (20).

12. Unité d'entraînement (1) selon l'une des revendications précédentes, **caractérisée en ce qu'**un carter (10) de l'unité d'entraînement (1) supporte la machine électrique (11) et/ou la machine électrique (11), plus particulièrement le carter (112) de la machine électrique (11), peut être reliée avec le carter (10) de l'unité d'entraînement (1).

13. Unité d'entraînement (1) selon l'une des revendications précédentes, **caractérisée en ce qu'**un carter (10) de l'unité d'entraînement (1) comprend deux parties de carter (100, 101), le logement (113, 37) de l'arbre de sortie (110) de la machine électrique (11) et/ou de l'unité d'embrayage (3), plus particulièrement de l'arbre d'embrayage (30), ayant lieu dans le carter (10) de façon à ce qu'un palier est disposé dans une partie de carter (100) et un autre palier est disposé dans l'autre partie de carter (101).

14. Unité d'entraînement hybride avec une unité d'entraînement (1) selon l'une des revendications précédentes et un moteur à combustion interne (2).

15. Véhicule aquatique avec une unité d'entraînement (1) selon l'une des revendications 1 à 13 et une unité d'entraînement hybride selon la revendication 14.
